# EUROPEAN PATENT APPLICATION

(11) **EP 4 845 141 A1**
(43) Date of publication of application: **25.11.2026**
(21) Application number: 25741772.5
(22) Date of filing: 09.01.2025
(51) Int. Cl.: H04N 5/92, G06Q 50/18

(54) **INFORMATION PROCESSING DEVICE FOR PROCESSING INFORMATION ON DATA USED FOR TRAINING OF MACHINE-LEARNING TRAINED MODEL, INFORMATION PROCESSING DEVICE CONTROL METHOD, AND PROGRAM**

(30) Priority: 17.01.2024 JP 2024005381
(71) Applicant: Canon Kabushiki Kaisha, Tokyo 146-8501 (JP)
(72) Inventor: UENO Daiyu, Tokyo 146-8501 (JP)
(74) Representative: TBK
(86) International application number: PCT/JP2025/000493
(87) International publication number: WO 2025/154640

(57) **Abstract**

[Problem]

To provide an information processing device, a control method for the information processing device, and a program capable of proving that, for content generated using machine learning, input data of a machine learning model used to generate the content is not unauthorized data that may give rise to, for example, copyright issues.

[Solution]

A smartphone 400, serving as an information processing device, includes: a generation unit (machine learning unit 106) that generates, as content, output data output from a trained machine learning model; and an addition unit (image data management unit 352) that adds, to the generated content, machine learning information relating to the trained machine learning model.

## Description

### Technical Field

The present invention relates to an information processing device, a control method for the information processing device, and a program for processing information relating to data used for training a trained model of machine learning.

### Background Art

In recent years, services that provide functions for editing or generating various types of content, such as images, using machine learning have become widespread. For example, a service for learning the artistic style of images is known. In such a service, by inputting text or an image as input data into a trained model, an image that follows the learned artistic style can be output as output data. In this case, if images whose copyright protection period has expired, such as famous paintings created by Monet or Van Gogh, or images provided under a royalty-free license are used as the input data, no copyright issues arise. On the other hand, if, for example, data protected by copyright is used as the input data without authorization, copyright issues may arise. Under such circumstances, there is a need to prove that data generated by machine learning has been obtained using, as input data, data that is free from copyright concerns.

For example, Non-Patent Literature 1 discloses that, in order to authenticate the source, history, and provenance of image data, metadata indicating details of editing performed on the image data is added to the image data.

### Citation List

### Non-Patent Literature

Non-Patent Literature 1: Coalition for Content Provenance and Authenticity (C2PA), "C2PA Specifications," <Technical Specifications Version 1.2>, [online], November 3, 2022, [retrieved on January 23, 2023], Internet <URL: https://c2pa.org/specifications/specifications/1.2/specs/C2PA_Specification.html>

### Summary of Invention

### Technical Problem

In the configuration disclosed in Non-Patent Literature 1, it is possible to indicate information on source image data used as a basis for generating the image data; however, there is a problem in that it is not possible to prove that the source image data is not unauthorized data that may give rise to, for example, copyright issues.

The present invention provides an information processing device capable of proving that, for content generated using machine learning, input data of a machine learning model used to generate the content is not unauthorized data that may give rise to, for example, copyright issues.

### Solution to Problem

According to the present invention, an information processing device includes: a generation unit configured to generate, as content, output data output from a trained model of machine learning; and an addition unit configured to add, to the generated content, information relating to data used for training the trained model of the machine learning.

### Advantageous Effects of Invention

According to the present invention, it is possible to prove that, for content generated using machine learning, input data of a machine learning model used to generate the content is not unauthorized data that may give rise to, for example, copyright issues.

### Brief Description of Drawings

Fig. 1A is a front perspective view illustrating an external appearance of a digital camera.
Fig. 1B is a rear perspective view illustrating an external appearance of the digital camera.
Fig. 2 is a block diagram illustrating a hardware configuration of the digital camera.
Fig. 3 is a block diagram illustrating a software configuration including a digital camera, a smartphone, and an image data server.
Fig. 4 is a block diagram illustrating a hardware configuration of the smartphone.
Fig. 5A is a conceptual diagram of machine learning.
Fig. 5B is a conceptual diagram illustrating an example of application of machine learning.
Fig. 6A is a diagram illustrating an example (example 1) of a configuration of an image file.
Fig. 6B is a diagram illustrating a modification (example 2) of the configuration of the image file.
Fig. 7 is a flowchart illustrating a process (a learning process) performed by the smartphone.
Fig. 8 is a flowchart illustrating a process (an image generation process) performed by the smartphone.
Fig. 9 is a flowchart illustrating a process (an image capture process) performed by the digital camera.
Fig. 10 is a flowchart illustrating a process (an image reception process) performed by the digital camera.

### Description of Embodiments

Embodiments of the present invention will be described in detail below with reference to the accompanying drawings. It should be noted that the following embodiments are provided for illustrative purposes only and are not intended to limit the scope of the present invention. For example, each element of the present invention may be replaced with any element capable of performing a similar function. In addition, any additional element may be added.

### <External Configuration of Digital Camera>

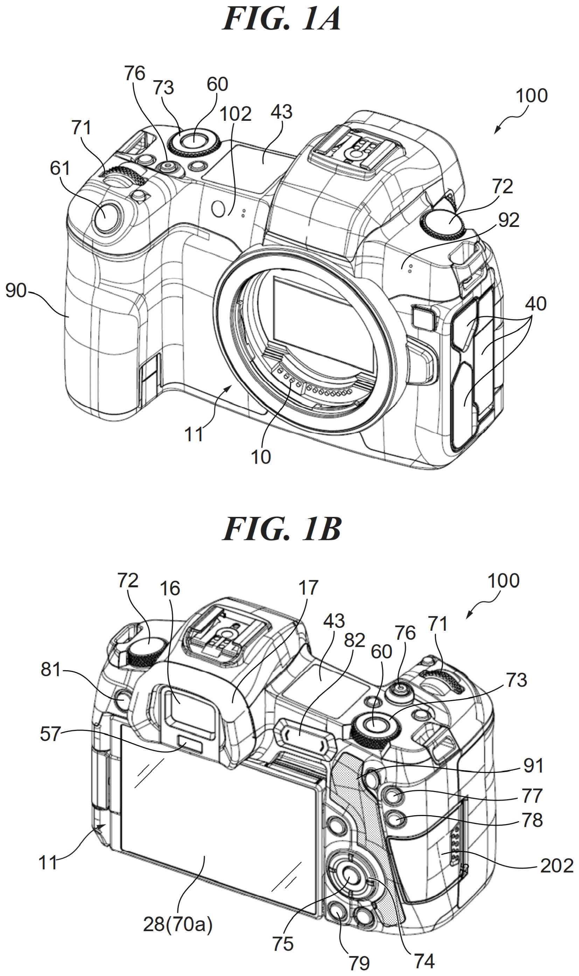

Fig. 1A is a front perspective view illustrating an external appearance of a digital camera. Fig. 1B is a rear perspective view illustrating an external appearance of the digital camera. As illustrated in Fig. 1A, a digital camera (imaging device) 100 includes a camera body 11. The digital camera 100 includes a communication terminal 10, a terminal cover 40, an out-of-finder display unit 43, a mode change switch 60, a shutter button 61, a main electronic dial 71, a power switch 72, a sub electronic dial 73, and a movie button 76, each provided on the camera body 11. The digital camera 100 further includes a grip portion 90, a speaker 92, and a light-emitting unit 102, each provided on the camera body 11. The communication terminal 10 is a terminal for communicating with a lens unit 150 described later. The out-of-finder display unit 43 is provided on an upper surface of the camera body 11 and displays, for example, various setting values such as a shutter speed and an aperture. The shutter button 61 is an operation member for providing a shooting instruction. The mode change switch 60 is an operation member for switching among various modes such as a shooting mode. The terminal cover 40 is a cover that protects a connector (not illustrated) for a connection cable or the like used to connect the digital camera 100 to an external device. The main electronic dial 71 can be rotated to change, for example, setting values such as a shutter speed and an aperture. The power switch 72 is an operation member for switching the power of the digital camera 100 on and off. The sub clcctronic dial 73 can be rotated to move, for example, a selection frame (cursor) displayed on a display unit 28 described later or to advance images. The movie button 76 is used to instruct start and stop of video shooting (recording).

As illustrated in Fig. 1B, the digital camera 100 includes an eyepiece portion 16, an eyepiece viewfinder 17 (hereinafter sometimes simply referred to as a "viewfinder"), a display unit 28, and an eye detection unit 57, each provided on the camera body 11. The digital camera 100 further includes a four-direction key 74, a SET button 75, an AE lock button 77, an enlargement button 78, a playback button 79, a menu button 81, a touch bar 82, a thumb rest portion 91, and a lid 202, each provided on the camera body 11. The eyepiece portion 16 is a portion to which a user brings an eye when looking into the eyepiece viewfinder 17 (a look-through type viewfinder). The user can view video images displayed on an electronic viewfinder (EVF) 29 inside the camera through the eyepiece portion 16. The eye detection unit 57 is a sensor that detects whether the user (photographer) is looking into the eyepiece portion 16. The display unit 28 is provided on a rear surface of the camera body 11 and displays, for example, images and various types of information. The display unit 28 includes a built-in touch panel 70a. The touch panel 70a is capable of detecting a touch operation on a display surface (touch operation surface) of the display unit 28.

The four-direction key 74 is configured such that its upper, lower, left, and right portions are each pressable, thereby enabling operations corresponding to presses of the respective portions. The SET button 75 is configured to be pressable and is mainly used to confirm a selected item or the like. The AE lock button 77 is configured to be pressable and is capable of fixing an exposure state in response to a pressing operation. The enlargement button 78 is an operation member for switching an enlargement mode on and off in a live view display (LV display) in a shooting mode. By operating the main electronic dial 71 after the enlargement mode is turned on, it is possible to enlarge or reduce a live view image (LV image). The enlargement button 78 also functions as an operation member for enlarging a playback image in a playback mode or increasing its enlargement ratio. The playback button 79 is an operation member for switching between the shooting mode and the playback mode. By pressing the playback button 79 during the shooting mode, the digital camera 100 transitions to the playback mode, and the latest image among images recorded on a recording medium 200 described later can be displayed on the display unit 28. The menu button 81 is configured to be pressable and is used to perform an instruction operation for displaying a menu screen. When the menu button 81 is pressed, a menu screen that enables various settings is displayed on the display unit 28. The user can intuitively perform various settings using the menu screen displayed on the display unit 28 together with the four-direction key 74 and the SET button 75.

The touch bar 82 is a linear multifunction bar (M-Fn bar) capable of receiving touch operations. The touch bar 82 is located at a position where it can be operated (touched) with the thumb of a right hand, for example, in a state in which the grip portion 90 is held by the right hand such that the shutter button 61 can be pressed by the index finger of the right hand (i.e., a state in which the grip portion 90 is held by the little finger, ring finger, and middle finger of the right hand). In other words, the touch bar 82 is located at a position where the user can operate it in a state (in a shooting position) in which the user holds the digital camera 100 while placing an eye against the eyepiece portion 16 to look into the viewfinder and is ready to press the shutter button 61 at any timing. The touch bar 82 can receive, for example, a tap operation (an operation of touching and releasing without movement within a predetermined period of time) and a left or right slide operation (an operation of moving a touch position while maintaining contact after touching). Unlike the touch panel 70a, the touch bar 82 does not have a display function. The grip portion 90 is a holding portion shaped to be easily gripped with the right hand when the user holds the digital camera 100. The shutter button 61 and the main electronic dial 71 are located at positions where the user can operate them with the index finger of the right hand in a state in which the user holds the digital camera 100 while gripping the grip portion 90 with, for example, the little finger, ring finger, and middle finger of the right hand. The sub electronic dial 73 and the touch bar 82 are located at positions where the user can operate them with the thumb of the right hand in the same state. The thumb rest portion 91 is a grip member provided at a position (a thumb standby position) on the rear side of the digital camera 100 where the user can easily place the thumb of the right hand while gripping the grip portion 90 without operating any operation members. The thumb rest portion 91 is made of a low-friction material such as rubber. This improves holding force (grip feeling). The lid 202 is a lid that covers a slot in which the recording medium 200 is stored.

### <Hardware Configuration of Digital Camera>

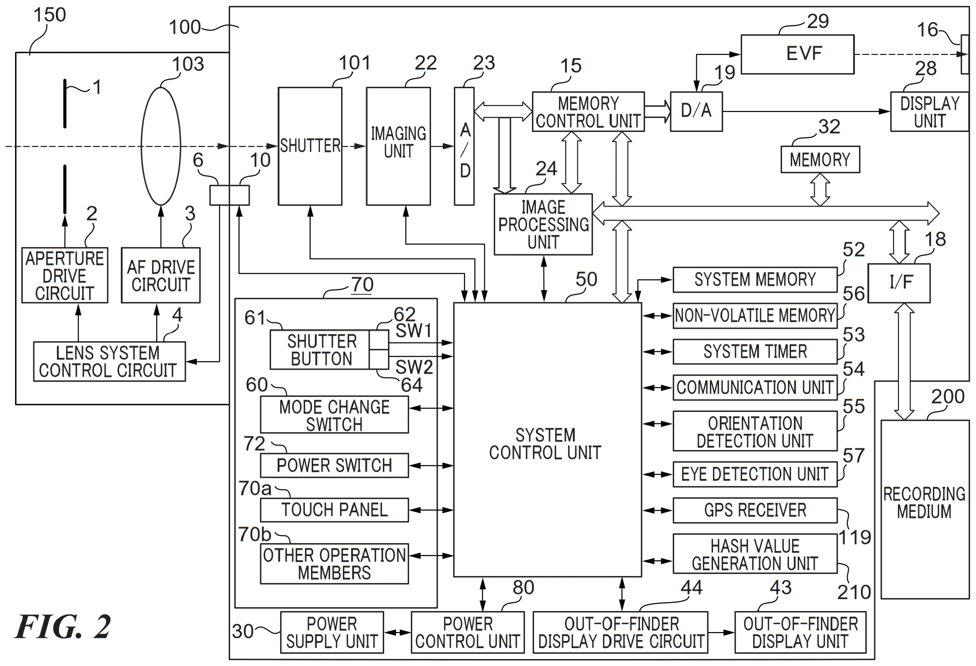

Fig. 2 is a block diagram illustrating a hardware configuration of the digital camera. The digital camera 100 illustrated in Fig. 2 is configured such that the lens unit 150 is detachably attachable thereto. The lens unit 150 includes an aperture 1, an aperture drive circuit 2, an AF drive circuit 3, a lens system control circuit 4, a communication terminal 6, and a lens 103. The communication terminal 6 is connected to the communication terminal 10 of the digital camera 100 in a state where the lens unit 150 is attached to the digital camera 100. This enables communication between the digital camera 100 and the lens unit 150. The lens system control circuit 4 controls the aperture 1 via the aperture drive circuit 2. The lens system control circuit 4 also performs focusing by displacing the position of the lens 103 via the AF drive circuit 3. The lens 103 typically includes a plurality of lenses; however, in Fig. 2, one of these lenses is representatively illustrated.

As illustrated in Fig. 2, the digital camera 100 includes a memory control unit 15, a recording medium I/F 18, a D/A converter 19, an imaging unit 22, an A/D converter 23, an image processing unit 24, an EVF 29, a power supply unit 30, and a memory 32. The digital camera 100 further includes an out-of-finder display drive circuit 44, a system control unit 50, a system memory 52, a system timer 53, a communication unit 54, an orientation detection unit 55, a non-volatile memory 56, and an eye detection unit 57. Furthermore, the digital camera 100 includes an operation unit 70, a power control unit 80, a shutter 101, a GPS receiver 119, and a hash value generation unit 210. The shutter 101 is a focal plane shutter capable of arbitrarily controlling an exposure time of the imaging unit 22 under control of the system control unit 50. Control by the system control unit 50 may be implemented by a single piece of hardware or by a plurality of pieces of hardware. The imaging unit 22 includes an image sensor such as a CCD or CMOS sensor that converts an optical image into an electrical signal. The imaging unit 22 may further include an imaging-plane phase difference sensor that outputs defocus amount information to the system control unit 50. The A/D converter 23 converts an analog signal output from the imaging unit 22 into a digital signal. The image processing unit 24 performs predetermined processing, including pixel interpolation, sizing processing such as reduction processing, and color conversion processing, on data from the A/D converter 23 or data from the memory control unit 15. The image processing unit 24 also performs predetermined arithmetic processing using data obtained by the imaging unit 22. The system control unit 50 performs exposure control and ranging control based on results of the arithmetic processing obtained by the image processing unit 24. Accordingly, through-the-lens (TTL) autofocus (AF) processing, auto exposure (AE) processing, flash pre-emission (EF) processing, and the like are performed. The image processing unit 24 performs predetermined arithmetic processing using data obtained by the imaging unit 22, and performs TTL auto white balance (AWB) processing based on the results of the arithmetic processing. Output data from the A/D converter 23 is written to the memory 32 via the image processing unit 24 and the memory control unit 15 in sequence, or is written to the memory 32 via the memory control unit 15 without passing through the image processing unit 24.

The memory 32 stores image data obtained by the imaging unit 22 and converted into digital data by the A/D converter 23, as well as image data for display on the display unit 28 and the EVF 29. The memory 32 has a storage capacity sufficient to store a predetermined number of still images and a predetermined duration of moving images and audio. The memory 32 also serves as a memory for image display (video memory). The D/A converter 19 converts the image data for display stored in the memory 32 into an analog signal and sends the analog signal to the display unit 28 and the EVF 29. As a result, the image data for display written into the memory 32 is displayed on the display unit 28 and the EVF 29 via the D/A converter 19. Each of the display unit 28 and the EVF 29 includes, for example, a display such as an LCD or an organic EL display, and performs display in accordance with the analog signal from the D/A converter 19. The digital signal obtained through A/D conversion by the A/D converter 23 and stored in the memory 32 is converted into an analog signal by the D/A converter 19. This signal is sequentially transferred to and displayed on the display unit 28 or the EVF 29. This enables live view (LV) display. Hereinafter, an image displayed in the live view display is referred to as a "live view image (LV image)."

The system control unit 50 includes at least one of: at least one processor; and a control unit including at least one circuit. The system control unit 50 performs overall control of the digital camera 100. The system control unit 50 executes a program recorded in the non-volatile memory 56. The system control unit 50 also performs display control by controlling the memory 32, the D/A converter 19, the display unit 28, the EVF 29, and the like. The system memory 52 includes, for example, a RAM. The system control unit 50 loads, into the system memory 52, constants and variables for operation of the system control unit 50, programs read from the non-volatile memory 56, and the like. The non-volatile memory 56 is, for example, an electrically erasable and rewritable memory such as an EEPROM. The non-volatile memory 56 stores, for example, constants and programs for operation of the system control unit 50. The system timer 53 is a timekeeping unit that measures time used for various controls and time of a built-in clock. The communication unit 54 transmits and receives video signals and audio signals to and from an external device connected via a wireless connection or a wired cable. The communication unit 54 is also connectable to a wireless local area network (LAN) or the Internet. The communication unit 54 is also capable of communicating with an external device via Bluetooth (registered trademark) or Bluetooth Low Energy. The communication unit 54 can transmit images captured by the imaging unit 22 (including LV images) and images recorded on the recording medium 200. The communication unit 54 can also receive various types of information such as image data and a video recording start instruction from an external device. When the communication unit 54 receives a video recording start instruction from an external device, the light-emitting unit 102 emits light or the speaker 92 outputs an electronic sound to notify the user of the reception of the video recording start instruction. In the present embodiment, the external device is a smartphone 400; however, the external device is not limited thereto.

The orientation detection unit 55 detects an orientation of the digital camera 100 with respect to the direction of gravity. It is determined whether an image captured by the imaging unit 22 is an image captured with the digital camera 100 held horizontally or an image captured with the digital camera 100 held vertically, based on the orientation detected by the orientation detection unit 55. The system control unit 50 can add information relating to the orientation detected by the orientation detection unit 55 to an image file of the image captured by the imaging unit 22, or can rotate the image and record the rotated image. The orientation detection unit 55 is not particularly limited, and may include, for example, an acceleration sensor, a gyro sensor, or the like. When an acceleration sensor or a gyro sensor is used for the orientation detection unit 55, it is also possible to detect movements of the digital camera 100 such as panning, tilting, lifting, and whether the digital camera 100 is stationary.

The eye detection unit 57 is a sensor that detects approach (eye placement) and separation (eye removal) of an eye (object) with respect to the eyepiece portion 16 of the eyepiece viewfinder 17, that is, a sensor that performs proximity detection. The system control unit 50 switches between display (display state) and non-display (non-display state) on the display unit 28 and the EVF 29 in accordance with a detection result of the eye detection unit 57. Specifically, at least in a shooting standby state and when a setting for switching a display destination is set to automatic switching, the system control unit 50 turns on display on the display unit 28 as the display destination during a state in which no eye is placed and sets the EVF 29 to a non-display state. In addition, the system control unit 50 turns on display on the EVF 29 as the display destination during a state in which an eye is placed and sets the display unit 28 to a non-display state. The eye detection unit 57 may include, for example, an infrared proximity sensor; however, the eye detection unit 57 is not limited thereto. This infrared proximity sensor can detect approach of an eye (object) to the eyepiece portion 16 of the viewfinder 17 that incorporates the EVF 29. When an eye approaches, infrared light emitted from a light-emitting portion (not illustrated) of the eye detection unit 57 is reflected by the eye and is received by a light-receiving portion (not illustrated) of the infrared proximity sensor. It is possible to determine how close the eye is to the eyepiece portion 16, that is, a distance between the eye and the eyepiece portion 16, based on an amount of the infrared light received by the light-receiving portion. In this manner, the eye detection unit 57 performs eye detection to detect a proximity distance of an eye to the eyepiece portion 16. The eye detection unit 57 detects that an eye is placed when an object approaching within a predetermined distance to the eyepiece portion 16 is detected from a state in which no eye is placed against (or near) the eyepiece portion 16. The eye detection unit 57 also detects that an eye is removed when the eye that has been detected as approaching moves away by a predetermined distance or more from a state in which the eye is placed against (or near) the eyepiece portion 16. A threshold used for detecting eye placement and a threshold used for detecting eye removal may be different from each other, for example, due to hysteresis or the like. After eye placement is detected, the state is assumed to be a state in which an eye is placed until eye removal is detected. After eye removal is detected, the state is assumed to be a state in which no eye is placed until eye placement is detected.

The GPS receiver 119 receives, from GPS satellites, GPS information for calculating position information and time information. The digital camera 100 receives GPS information via the GPS receiver 119 and calculates position information and time information based on the GPS information. The digital camera 100 can add the calculated position information and time information to captured images. The hash value generation unit 210 executes a hash function on an image file to generate (calculate) a hash value. In the digital camera 100, the system control unit 50 may generate the hash value in place of the hash value generation unit 210. Setting values such as a shutter speed and an aperture are displayed on the out-of-finder display unit 43 via the out-of-finder display drive circuit 44. The power control unit 80 includes a battery detection circuit, a DC-DC converter, a switch circuit for switching blocks to be supplied with power, and the like. Accordingly, the power control unit 80 can detect, for example, whether a battery is attached, a type of the battery, and a remaining battery level. The power control unit 80 can also control the DC-DC converter based on the detection results and an instruction from the system control unit 50 to supply a necessary voltage to respective units including the recording medium 200 for a necessary period. The power supply unit 30 is not particularly limited, and may include, for example, a primary battery such as an alkaline battery or a lithium battery, a secondary battery such as a NiCd battery, a NiMH battery or a Li battery, or an AC adapter. The recording medium I/F 18 is an interface with the recording medium 200. The recording medium 200 is not particularly limited, and may be, for example, a memory card or a hard disk. The recording medium 200 stores, for example, images captured by the imaging unit 22.

The operation unit 70 is an input unit that receives an operation (user operation) from a user. Various operation instructions can be provided to the system control unit 50 by input of the user operation. The operation unit 70 includes the shutter button 61, the mode change switch 60, the power switch 72, the touch panel 70a, and other operation members 70b. The other operation members 70b include the main electronic dial 71, the sub electronic dial 73, the four-direction key 74, the SET button 75, the movie button 76, the AE lock button 77, the enlargement button 78, the playback button 79, the menu button 81, the touch bar 82, and the like. The shutter button 61 includes a first shutter switch 62 and a second shutter switch 64. The first shutter switch 62 is turned on partway through operation of the shutter button 61, that is, at a so-called half-press (shooting preparation instruction), and generates a first shutter switch signal SW1. In response to the first shutter switch signal SW1, the system control unit 50 starts shooting preparation operations such as autofocus (AF) processing, auto exposure (AE) processing, auto white balance (AWB) processing, and flash pre-emission (EF) processing. The second shutter switch 64 is turned on upon completion of operation of the shutter button 61, that is, at a so-called full-press (shooting instruction), and generates a second shutter switch signal SW2. In response to the second shutter switch signal SW2, the system control unit 50 starts a series of image capture operations from reading out a signal from the imaging unit 22 to writing an image captured by the imaging unit 22 into the recording medium 200 as an image file.

The mode change switch 60 switches the operation mode of the system control unit 50 to one of a still image shooting mode, a video shooting mode, a playback mode, and the like. The still image shooting mode includes, for example, an auto shooting mode, an auto scene determination mode, a manual mode, an aperture priority mode (Av mode), a shutter speed priority mode (Tv mode), and a program AE mode (P mode). In addition, there are various scene modes corresponding to shooting settings for respective shooting scenes, a custom mode, and the like. By operating the mode change switch 60, it is possible to directly switch to any one of these modes. Alternatively, after temporarily switching to a list screen of shooting modes using the mode change switch 60, the mode may be selectively switched to one of the plurality of modes. As with the still image shooting mode, the video shooting mode may also include a plurality of modes. The touch panel 70a is a sensor that detects various touch operations on the display surface of the display unit 28 (the operation surface of the touch panel 70a). The touch panel 70a and the display unit 28 can be integrally configured. In this case, for example, the touch panel 70a is configured such that its light transmittance does not interfere with the display of the display unit 28, and is attached to an upper layer of the display surface of the display unit 28. Input coordinates on the touch panel 70a are then associated with display coordinates on the display surface of the display unit 28. This makes it possible to provide a graphical user interface (GUI) that allows the user to perform operations as if the user were directly operating a screen displayed on the display unit 28. The system control unit 50 can detect the following operations and states on the touch panel 70a:
Touch-down: a finger or a pen that has not been touching the touch panel 70a newly touches the touch panel 70a, that is, a start of a touch.
Touch-on: a state in which the touch panel 70a is being touched with a finger or a pen.
Touch-move: a finger or a pen moves while maintaining contact with the touch panel 70a.
Touch-up: a finger or a pen that has been touching the touch panel 70a is separated (released) from the touch panel 70a, that is, an end of a touch.
Touch-off: a state in which nothing is touching the touch panel 70a.

When a touch-down is detected, a touch-on is also detected at the same time. After the touch-down, the touch-on is normally continuously detected unless a touch-up is detected. When a touch-move is detected, a touch-on is also detected at the same time. Even if a touch-on is detected, a touch-move is not detected if the touch position has not moved. After it is detected that all fingers or pens that have been touching have performed a touch-up, the state becomes a touch-off. These operations and states, as well as position coordinates at which a finger or a pen is touching on the touch panel 70a, are notified to the system control unit 50 via an internal bus. The system control unit 50 determines what kind of operation (touch operation) has been performed on the touch panel 70a based on the information notified via the internal bus. A moving direction of a finger or a pen moving on the touch panel 70a in a touch-move is also determined for each of a vertical component and a horizontal component on the touch panel 70a based on changes in the position coordinates. When it is detected that a touch-move has been performed over a predetermined distance or more, it is determined that a slide operation has been performed. An operation in which a finger is moved quickly over a certain distance while maintaining contact with the touch panel 70a and is then released is referred to as a "flick." In other words, a flick is a quick stroking operation as if flicking the touch panel 70a with a finger. When it is detected that a touch-move has been performed over a predetermined distance or more at a predetermined speed or higher and a touch-up is subsequently detected, it is determined that a flick has been performed; that is, it is determined that a flick has been performed following a slide operation. A touch operation in which a plurality of positions (e.g., two points) are touched simultaneously (multi-touch) and the respective touch positions are moved closer to each other is referred to as "pinch-in," and a touch operation in which the respective touch positions are moved away from each other is referred to as "pinch-out." Pinch-out and pinch-in are collectively referred to as a pinch operation (or simply "pinch"). The touch panel 70a is not particularly limited, and may be of any type such as a resistive type, a capacitive type, a surface acoustic wave type, an infrared type, an electromagnetic induction type, an image recognition type, or an optical sensor type. Further, as a detection method for the touch panel 70a, either a method that detects a touch when contact with the touch panel occurs or a method that detects a touch when a finger or a pen approaches the touch panel may be used.

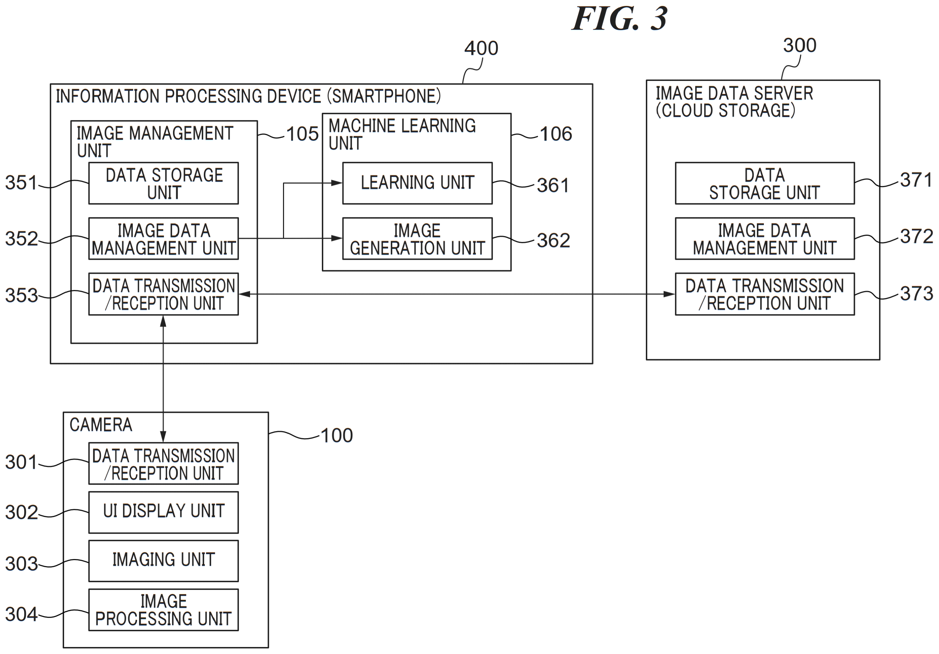

Fig. 3 is a block diagram illustrating a software configuration including a digital camera, a smartphone, and an image data server. As illustrated in Fig. 3, the digital camera 100, the smartphone 400, and an image data server (cloud storage) 300 are communicatively connected to each other. The digital camera 100 includes a data transmission/reception unit 301, a UI display unit 302, an imaging unit 303, and an image processing unit 304. The data transmission/reception unit 301 transmits, for example, image data captured by the imaging unit 303 to a data transmission/reception unit 353 of the smartphone 400, or receives data from the data transmission/reception unit 353 of the smartphone 400. The UI display unit 302 displays, for example, images captured by the imaging unit 303 and a setting screen for setting imaging conditions. The imaging unit 303 performs imaging processing to generate image data. The image processing unit 304 performs image processing, image sorting processing, and the like on the image data captured by the imaging unit 303.

The smartphone 400 includes an image management unit 105 and a machine learning unit (generation unit) 106. The image management unit 105 includes a data storage unit 351, an image data management unit (addition unit) 352, and a data transmission/reception unit 353. The data storage unit 351 stores image data (image files) and the like transmitted from the data transmission/reception unit 301 of the digital camera 100 in a RAM 403 or a storage device 404. The image data management unit 352 manages input of image data to the machine learning unit 106 and image data output from the machine learning unit 106. The data transmission/reception unit 353 transmits image data to the data transmission/reception unit 301 of the digital camera 100 or receives data from a data transmission/reception unit 373 of the image data server 300. The machine learning unit 106 can generate content such as image data using machine learning (generation step). That is, the machine learning unit 106 inputs image data as input data to a trained model and causes the trained model to output new image data (content) as output data. Here, generation of content includes, for example, generating new content using machine learning and editing existing content using machine learning to generate new content. Note that the new content is provided with machine learning information 505 described later and, for example, image data used as input data. In the present embodiment, the machine learning unit 106 includes a learning unit 361 and an image generation unit 362. The learning unit 361 can perform, using a GPU 410, processing for learning features such as an artistic style from image data for machine learning. The image generation unit 362 generates new image data that reflects features obtained as a result of learning by the learning unit 361. Processing by the learning unit 361 and the image generation unit 362 may be performed using a control unit 401 in addition to the GPU 410. Specifically, to execute a learning program including a trained model, the control unit 401 and the GPU 410 cooperate with each other to perform computation. Computation for processing by the learning unit 361 may also be performed only by the control unit 401 or only by the GPU 410. The image generation unit 362 may use the GPU 410 to generate image data.

The image data server 300 includes a data storage unit 371, an image data management unit 372, and a data transmission/reception unit 373. The data storage unit 371 functions as a storage that stores, for example, image data for machine learning used by the machine learning unit 106 in a RAM (not illustrated) or a storage device (not illustrated). The image data management unit 372 manages image data for machine learning. The data transmission/reception unit 373 transmits image data for machine learning to the data transmission/reception unit 353 of the smartphone 400, or receives image data captured by the digital camera 100 from the data transmission/reception unit 353 of the smartphone 400.

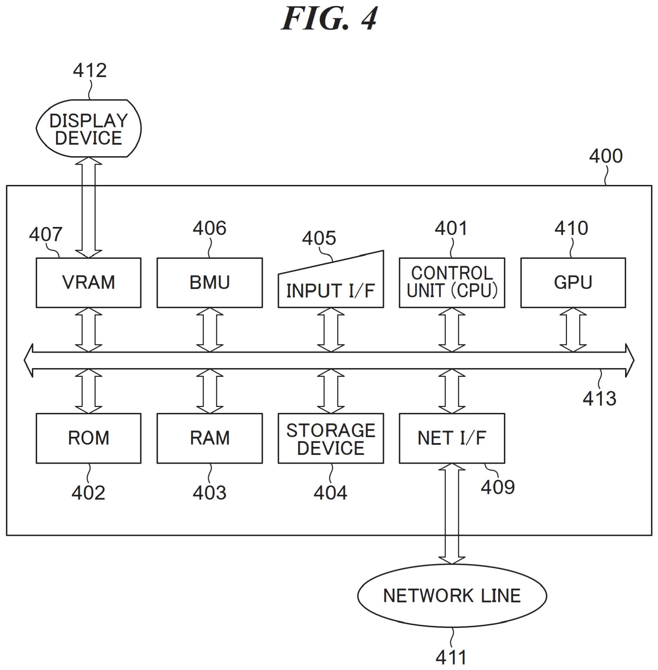

Fig. 4 is a block diagram illustrating a hardware configuration of the smartphone. The smartphone 400 illustrated in Fig. 4 is a portable information processing device. Note that, although the information processing device is the smartphone 400 in the present embodiment, the information processing device is not limited thereto, and may be, for example, a personal computer, a tablet terminal, or the like. As illustrated in Fig. 4, the smartphone 400 includes a control unit (CPU) 401, a read-only memory (ROM) 402, a random access memory (RAM) 403, a storage device 404, and an input interface 405. The smartphone 400 further includes a bit move unit (BMU) 406, a video RAM (VRAM) 407, a network interface 409, a GPU 410, a display device 412, and a system bus 413. The control unit 401 is a computer that performs overall control of the smartphone 400. The ROM 402 stores programs and parameters that do not need to be changed. These programs include, for example, programs for causing the control unit 401 to perform respective steps (a control method for the information processing device). The RAM 403 temporarily stores programs and data supplied from external devices other than the smartphone 400. The storage device 404 includes, for example, a hard disk drive (HDD), a solid-state drive (SSD) using flash memory, a hybrid drive using both a hard disk and flash memory, a memory card, or the like. The storage device 404 stores programs such as an operating system (OS) and various types of data. The input interface 405 is connected to an input device (not illustrated) that receives user operations. The input device is not particularly limited, and may be, for example, a pointing device, a keyboard, or the like.

The BMU 406 controls data transfer between memories (e.g., between the VRAM 407 and another memory) and between a memory and each I/O device (e.g., the network interface 409). The VRAM 407 renders an image to be displayed on the display device 412. The image generated in the VRAM 407 is sent to the display device 412 in accordance with a predetermined rule. As a result, the image is displayed on the display device 412. The network interface 409 is connected to a network line 411 such as the Internet. The GPU 410 is a control unit capable of performing efficient computation by processing a larger amount of data in parallel. The GPU 410 is a processor for neural network computation; for example, when learning is performed multiple times using a learning model such as deep learning, the GPU 410 can perform the learning at high speed. In the smartphone 400, control can be performed by the control unit 401 alone, by the GPU 410 alone, or by the control unit 401 and the GPU 410 in cooperation. In addition, in the smartphone 400, for example, a tensor processing unit (TPU) or a neural network processing unit (NPU) may be used instead of the GPU 410. The system bus 413 connects the respective units from the control unit 401 to the GPU 410 such that they can communicate with one another.

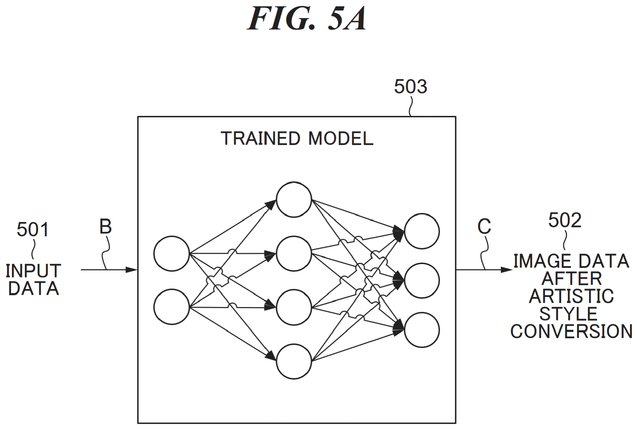

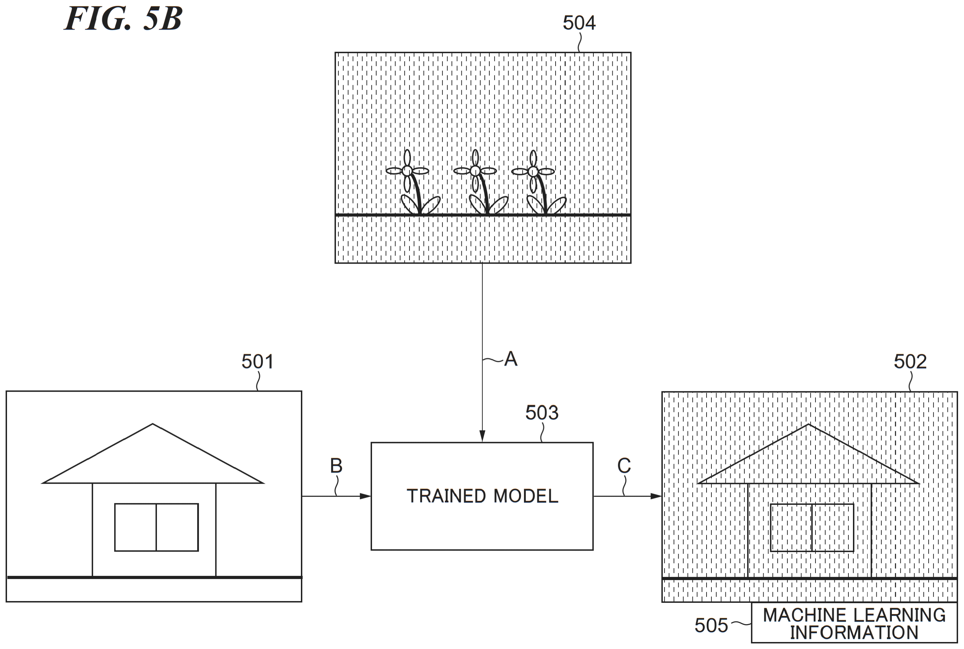

Fig. 5A is a conceptual diagram of machine learning. Fig. 5B is a conceptual diagram illustrating an example of application of machine learning. As illustrated in Figs. 5A and 5B, a trained model 503 is used in machine learning. In the present embodiment, the trained model 503 is a model that has been trained on images of rainy conditions using a large number of pieces of training image data 504 (e.g., landscape images) capturing rainy conditions that are input in advance (see arrow A in Fig. 5B). In this learning, for example, it is preferable to extract artistic style feature amounts and pattern feature amounts from images to be learned by using a convolutional neural network (CNN), and to calculate errors at that time. It is also preferable to use a method of optimizing weights so as to minimize errors in image restoration using a convolutional autoencoder (CAE), although the present embodiment is not limited thereto. In addition, when a large number of images are to be learned by the learning unit 361, the use of the GPU 410 enables the learning process to be accelerated.

Input data 501 is input to the trained model 503 (see arrow B in Figs. 5A and 5B). The input data 501 is image data. In the present embodiment, the input data 501 is image data captured by the digital camera 100 and is transmitted from the digital camera 100 to the smartphone 400. As illustrated in Fig. 5B, the input data 501 is, for example, image data in which a house is captured. Output data 502 is then output as content from the trained model 503 (see arrow C in Figs. 5A and 5B). The output data 502 is image data that has been converted to have the features of images learned by the trained model 503, that is, to have a learned artistic style. As illustrated in Fig. 5B, the output data 502 reflects the features of images learned by the trained model 503, namely, "images of rainy conditions," and thus becomes image data as if the house had been captured while it was raining. In this manner, the output data 502 includes an image having an artistic style different from that of the image of the input data 501. The machine learning information 505 is added to the output data 502. The "machine learning information 505" refers to information relating to data used for training the trained model of machine learning, as will be described later. In the present embodiment, deep learning is preferred as the machine learning algorithm; however, the algorithm is not limited thereto, and, for example, a support vector machine, logistic regression, a decision tree, or the like may be used.

Incidentally, when content is generated using machine learning, the image data used to generate the content (the input data 501 and the training image data 504) may be unauthorized image data that could give rise to, for example, copyright issues. In such a case, if the content (e.g., the output data 502) is made public, the content may also give rise to copyright issues.

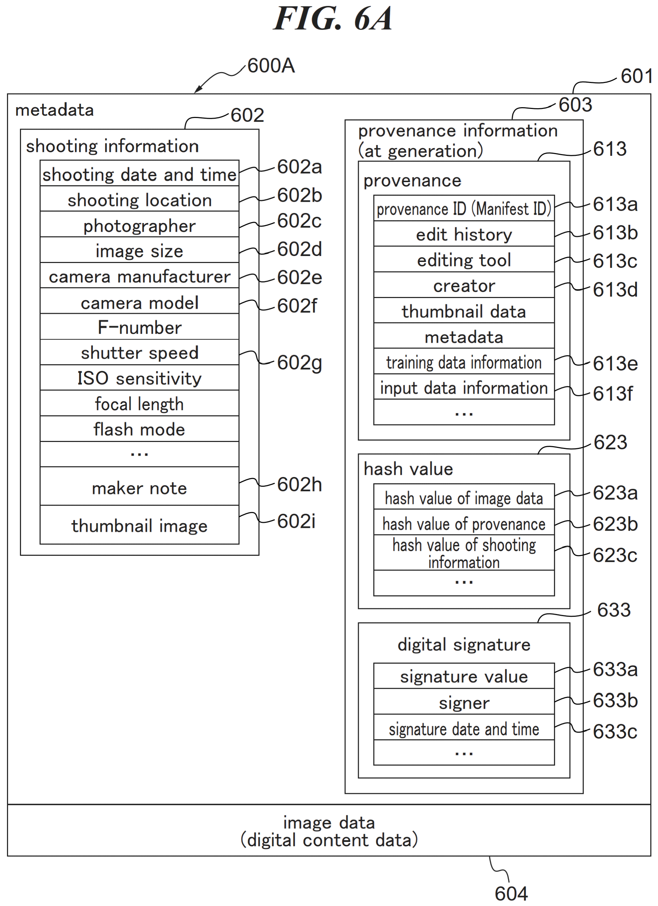

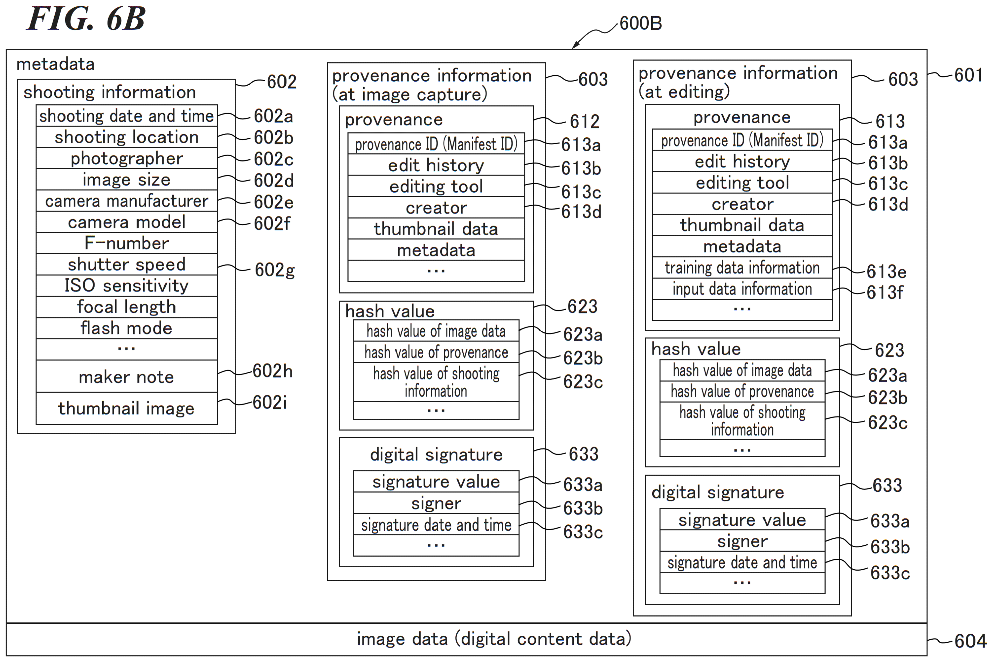

To address this, the smartphone 400 is configured to reduce the occurrence of such copyright issues. The configuration and operation thereof will be described below. Fig. 6A is a diagram illustrating an example (example 1) of a configuration of an image file. Fig. 6B is a diagram illustrating a modification (example 2) of the configuration of the image file. First, an image file 600A illustrated in Fig. 6A will be described. The image file 600A includes image data 604, which is content data (output data 502), and metadata 601 associated with the image data 604. The metadata 601 includes shooting information (image capturing information) 602 and provenance information 603. The shooting information 602 is information obtained when the input data 501, which serves as a basis of the image data 604, was generated by the digital camera 100, that is, when imaging processing was performed by the digital camera 100. The shooting information 602 is not particularly limited, and examples thereof include various shooting parameters (shooting conditions) such as a shooting date and time 602a, a shooting location 602b, a photographer 602c, an image size 602d, a camera manufacturer 602e, a camera model 602f, and a shutter speed 602g. Other examples include a maker note 602h and a thumbnail image 602i. The shooting information 602 is generated by the system control unit 50 of the digital camera 100 in accordance with a predetermined technical standard such as Exchangeable image file format (Exif). It is preferable that the shooting information 602 be added as is as part of the metadata 601 of the image data 604.

The provenance information 603 is information for proving the authenticity of the image data 604, and is used, for example, to verify the source and history of the image data 604. The provenance information 603 is generated in accordance with a predetermined technical standard such as Coalition for Content Provenance and Authenticity (C2PA). The provenance information 603 is information corresponding to the machine learning information 505 and is added to the image data 604 by the image data management unit 352 (addition step). In the present embodiment, the machine learning information 505 is information relating to machine learning and is used in the generation of the image data 604 (content). The provenance information 603 includes a provenance (assertion) 613, a hash value 623, and a digital signature 633. The provenance 613 is not particularly limited, and examples thereof include provenance identification information (Manifest ID) 613a, an edit history 613b, an editing tool 613c, a creator 613d, training data information 613e, and input data information 613f. The provenance 613 may also include an image obtained by reducing (or compressing) the image data 604. The provenance identification information 613a is information for uniquely identifying the provenance 613. The edit history 613b is information indicating the details of editing performed on the image data 604. The editing tool 613c is information indicating a tool used for editing the image data 604. The creator 613d is information relating to the creator of the image data 604. The training data information 613e is information relating to the trained model 503, and may be, for example, location information (an address indicated by a URL) of the learning unit 361 where the trained model 503 is stored. The input data information 613f is information relating to the input data 501, and may be, for example, location information (an address indicated by a URL) of the data storage unit 351 where the input data 501 is stored.

The hash value 623 is a hash value of the image data 604 and can guarantee the provenance 613. The hash value 623 is also a hash value of the input data 501. It is preferable that the hash value 623 be generated by the hash value generation unit 210 of the digital camera 100 and added as is as part of the metadata 601 of the image data 604. The hash value 623 is not particularly limited, and examples thereof include a hash value 623a of image data, a hash value 623b of provenance, and a hash value 623c of shooting information. The digital signature 633 is information obtained by encrypting the hash value 623 with a private key. The hash value 623 is obtained by decrypting the digital signature 633 with a public key that is paired with the private key. The digital signature 633 is not particularly limited, and examples thereof include a signature value 633a, a signer 633b, and a signature date and time 633c. The provenance information 603 as described above is used to determine the propriety of the data used to generate the image data 604, that is, to determine whether the data constitutes unauthorized image data that could give rise to, for example, copyright issues. When it is determined that the data used to generate the image data 604 does not constitute unauthorized image data, this fact can be demonstrated on the basis of the provenance information 603. On the other hand, when it is determined that the data used to generate the image data 604 constitutes unauthorized image data, it is preferable to refrain from making the image data 604 public, depending on various conditions such as the intended publication destination of the image data 604.

Next, an image file 600B illustrated in Fig. 6B will be described, focusing mainly on differences from the image file 600A described above, and therefore redundant descriptions will be omitted. The image file 600B is an image file in which an image has been edited by machine learning while retaining, as provenance, information of the image at the moment of shooting. The image file 600B includes the image data 604 and the metadata 601. The metadata 601 includes the shooting information 602 and two pieces of provenance information 603. Of the two pieces of provenance information 603, one is provenance information at the time of shooting, and includes a provenance 612, as well as the hash value 623 and the digital signature 633 as described above. Since the provenance 612 is information obtained at the time of shooting, that is, before editing by machine learning, the training data information 613e and the input data information 613f have not yet been added. The other piece of provenance information 603 is provenance information at the time of editing, and includes the provenance 613, the hash value 623, and the digital signature 633 as described above.

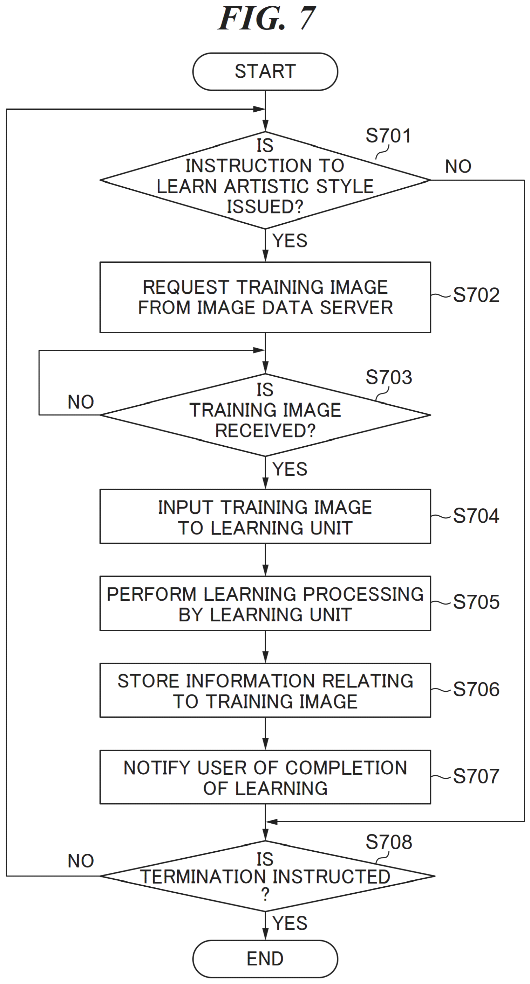

Fig. 7 is a flowchart illustrating a process (a learning process) performed by the smartphone. The learning process is a process in which the smartphone 400 receives the training image data 504 from the image data server 300 and learns an artistic style of images included in the training image data 504. Each step in the flowchart illustrated in Fig. 7 is realized by the control unit 401 loading a program stored in the non-volatile memory 402 into the RAM 403 and executing the program. As illustrated in Fig. 7, in step S701, the control unit 401 of the smartphone 400 determines whether an instruction to learn an artistic style, that is, an instruction to perform the learning process, has been issued. The learning instruction (the instruction to perform the process in step S701) is issued by a user of the smartphone 400 operating the input device. The control unit 401 can determine whether the learning instruction has been issued based on the presence or absence of the learning instruction via the input device. If it is determined in step S701 that the learning instruction has been issued, the process proceeds to step S702. On the other hand, if it is determined in step S701 that the learning instruction has not been issued, the process proceeds to step S708.

In step S702, the control unit 401 requests the image data server 300 to transmit the training image data 504 (training images).

In step S703, the control unit 401 determines whether the training image data 504 has been received from the image data server 300. If it is determined in step S703 that the training image data 504 has been received, the process proceeds to step S704. In this case, the training image data 504 is stored in the data storage unit 351 by the image data management unit 352. On the other hand, if it is determined in step S703 that the training image data 504 has not been received, the process waits at step S703.

In step S704, the control unit 401 inputs the training image data 504 determined to have been received in step S703 to the learning unit 361.

In step S705, the control unit 401 causes the learning unit 361 to perform learning processing. In the learning processing, the aforementioned convolutional neural network (CNN) or the like can be used. As a result, it is possible to learn an artistic style of images included in the training image data 504.

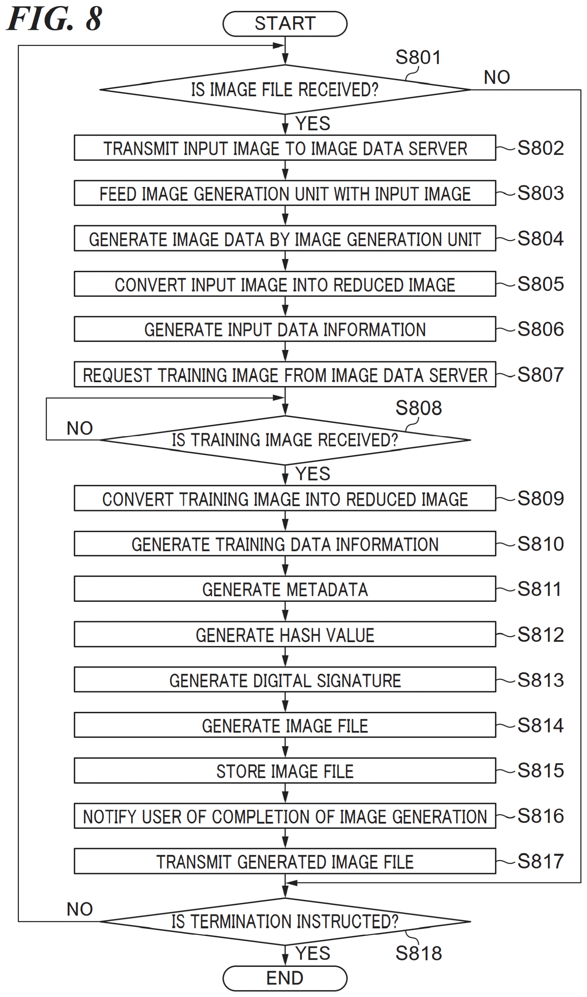

In step S706, the control unit 401 stores, in the data storage unit 351, the data used in step S705. Examples of the data stored in the data storage unit 351 include information relating to the training image data 504 and location information (an address indicated by a URL) of the image data server 300, which is the transmission source of the training image data 504. The data stored in the data storage unit 351 is required for processing in step S810 (see Fig. 8) described later.

In step S707, the control unit 401 notifies the user that the learning processing has been completed. The notification method is not particularly limited, and examples thereof include a method of displaying a message indicating completion of the learning processing on the display device 412, as well as a method using sound.

In step S708, the control unit 401 determines whether an instruction to terminate the learning process has been issued. The termination of the learning process is instructed by the user of the smartphone 400 operating the input device. The control unit 401 can determine whether the instruction to terminate the learning process has been issued based on the presence or absence of such an instruction via the input device. If it is determined in step S708 that termination has been instructed, the process ends. On the other hand, if it is determined in step S708 that termination has not been instructed, the process returns to step S701, and the subsequent steps are sequentially performed.

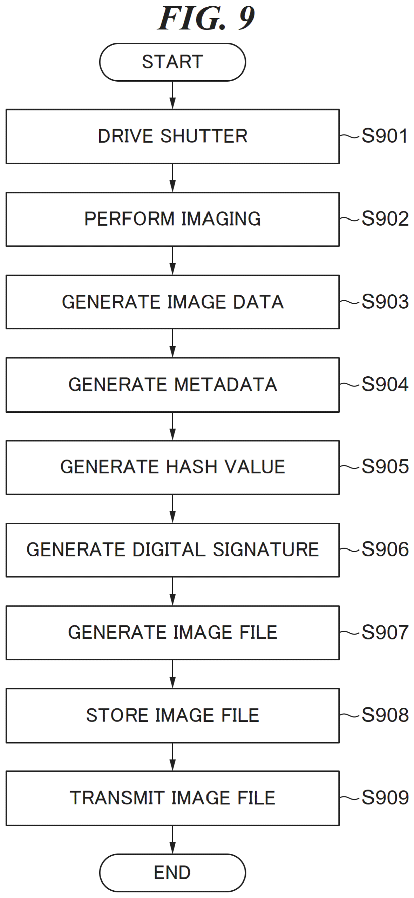

Fig. 9 is a flowchart illustrating a process (an image capture process) performed by the digital camera. The image capture process is a process in which the digital camera 100 performs image capturing. A program based on the flowchart illustrated in Fig. 9 is started by an operation such as pressing of the shutter button 61 of the digital camera 100 and is executed as is until completion. As illustrated in Fig. 9, in step S901, the system control unit 50 of the digital camera 100 drives the shutter 101. The exposure time is controlled by this driving.

In step S902, the system control unit 50 controls the imaging unit 22 to perform imaging processing for converting light from a subject, which is received through the shutter 101, into an electrical signal, that is, analog image data.

In step S903, the system control unit 50 performs image processing such as development processing and encoding processing on the electrical signal obtained by the imaging processing in step S902, thereby generating image data that serves as the input data 501. The input data 501 is input to the trained model 503 and is output as the image data 604 of the image file 600A illustrated in Fig. 6A or the image data 604 of the image file 600B illustrated in Fig. 6B.

In step S904, the system control unit 50 generates metadata associated with the input data 501. Since this metadata is substantially the same as the metadata 601 (see Figs. 6A and 6B), the description thereof will be given with reference to the metadata 601. As described above, the metadata 601 includes the shooting information 602 and the provenance information 603. Note that, in the digital camera 100, the provenance 613 is in a state in which the training data information 613e and the input data information 613f are not yet included, and this state is maintained until step S909. In addition, in step S904, the provenance 613 (in the case of Fig. 6A) or the provenance 612 (in the case of Fig. 6B) is generated as part of the provenance information 603. In the following description, the provenance 613 will be described as a representative example.

In step S905, the system control unit 50 executes a hash function on the binary data of each of the input data 501 and the provenance 613 to generate the hash value 623. Note that the system control unit 50 may also generate the hash value 623 for the binary data of the shooting information 602. In addition, for the binary data of the provenance 613, a hash value may be generated for each unit such as, for example, the edit history 613b and the creator 613d, in order to detect tampering with the input data 501.

In step S906, the system control unit 50 generates the digital signature 633. As described above, the digital signature 633 includes the signature value 633a, the signer 633b, and the signature date and time 633c. The signature value 633a is generated by encrypting the hash value 623 generated in step S905 using a private key prepared in advance. It is preferable that a public key paired with this private key also be included in the digital signature 633. In addition, the digital signature 633 may include information for proving that this public key is a public key issued by a trusted manufacturer. Examples of such proof information include, but are not particularly limited to, information indicating the manufacturer of the digital camera 100 as the signer 633b, and a public key certificate indicating that the public key has been authenticated by a certificate authority. By adding such a digital signature 633 to the image file 600A, it is indicated that the image file 600A is a reliable image file. Note that, as the signer 633b, the model of the digital camera 100 may be used instead of the manufacturer of the digital camera 100. In addition, the date and time at which generation of the digital signature 633 is completed is used as the signature date and time 633c. The signature date and time 633c may also be included in the provenance 613.

In step S907, the system control unit 50 adds the metadata 601 to the input data 501 to generate the image file 600A. Note that the image file 600A is generated in accordance with the JPEG format when the input data 501 is a still image, and is generated in accordance with the MPEG format when the input data 501 is a moving image.

In step S908, the system control unit 50 stores the image file 600A generated in step S907 in the recording medium 200.

In step S909, the system control unit 50 transmits the image file 600A stored in step S908 to the smartphone 400 via the network line 411. As a result, the image file 600A is received by the smartphone 400. In the smartphone 400, an image generation process is then performed for the input data 501 of the image file 600A (see Fig. 8).

Fig. 8 is a flowchart illustrating a process (an image generation process) performed by the smartphone. The image generation process is a process in which an artistic style is applied to the input data 501 transmitted from the digital camera 100 to generate new image data, and the new image data is transmitted to the digital camera 100. Each step in the flowchart illustrated in Fig. 8 is realized by the control unit 401 loading a program stored in the non-volatile memory 402 into the RAM 403 and executing the program. As illustrated in Fig. 8, in step S801, the control unit 401 of the smartphone 400 determines whether an image file transmitted from the digital camera 100 has been received. This image file includes the input data 501 (an input image) and metadata associated with the input data 501. If it is determined in step S801 that the image file has been received, the process proceeds to step S802. In this case, the input data 501 is stored in the data storage unit 351 by the image data management unit 352. On the other hand, if it is determined in step S801 that the
image file has not been received, the process proceeds to step S818.

In step S802, the control unit 401 transmits the input data 501 included in the image file determined to have been received in step S801 to the image data server 300. This transmission is performed in order to embed, in the image file, publicly available location information of the image data server 300 so as to prove which image was used as the input image for the trained model of machine learning. It is assumed that the location information of the image data server 300 is received as a response when the input image is transmitted.

In step S803, the control unit 401 inputs the input data 501 in the image file determined to have been received in step S801 into the image generation unit 362 (trained model 503).

In step S804, the control unit 401 controls the image generation unit 362 to output the output data 502 as content from the image generation unit 362 to which the input data 501 has been input in step S803. As described above, the output data 502 is image data that has been converted to have the features of images learned by the trained model 503, that is, to have a learned artistic style. In the present embodiment, the output data 502 reflects the features of images learned by the trained model 503, namely, "images of rainy conditions," and thus becomes image data as if a house had been captured while it was raining (see Fig. 5B). Note that the output data 502 may be newly generated image data 604 (see Fig. 6A), or may be image data 604 generated by editing existing image data (see Fig. 6B).

In step S805, the control unit 401 converts the input data 501 in the image file determined to have been received in step S801 into reduced image data (a reduced image). This makes it possible to prevent the file size of the image file 600A (and similarly of the image file 600B) from becoming excessively large, as would occur if the input data 501 were embedded at its original size.

In step S806, the control unit 401 generates the input data information 613f to be embedded in the provenance 613. It is preferable that the input data information 613f include at least one of the location information of the image data server to which the input data has been transmitted in step S802 and the reduced image created in step S805.

In step S807, the control unit 401 requests a training image from the image data server 300. The training image is converted into a reduced image in step S809 and is embedded in the content. The conversion of the training image into a reduced image may be performed by the image data server 300. In addition, in step S807, location information of the training image in the image data server 300 may also be received.

In step S808, the control unit 401 determines whether the training image requested in step S807 has been received from the image data server 300. If it is determined in step S808 that the training image has been received, the process proceeds to step S809. In this case, the training image is stored in the data storage unit 351 by the image data management unit 352. On the other hand, if it is determined in step S808 that the training image has not been received, the process waits at step S808.

In step S809, the control unit 401 converts the training image determined to have been received in step S808 into a reduced image. This makes it possible to prevent the file size of the image file 600A (and similarly of the image file 600B) from becoming excessively large, as would occur if the training image were embedded at its original size.

In step S810, the control unit 401 generates the training data information 613e to be included in the provenance 613. It is preferable that the training data information 613e include at least one of the location information of the training image stored in the image data server 300 and received in step S808 and the reduced image created in step S809.

In step S811, the control unit 401 generates the metadata 601. For example, this metadata 601 corresponds to the metadata 601 of Fig. 6A when the image data 604 is newly generated and the image data 604 serves as the starting point, and corresponds to the metadata 601 of Fig. 6B when the image data 604 is generated by editing existing image data that serves as the starting point. In addition, the provenance 613 of the metadata 601 includes the training data information 613e and the input data information 613f.

In step S812, the control unit 401 executes a hash function on the binary data of each of the image data 604 and the provenance 613 to generate the hash value 623. Note that the control unit 401 may also generate the hash value 623 for the binary data of the shooting information 602. As a result, when the training data information 613e or the input data information 613f used in machine learning is altered, the corresponding information will no longer match the hashed data. Tampering can then be detected based on this mismatch.

In step S813, the control unit 401 generates the digital signature 633. As described above, the digital signature 633 includes the signature value 633a, the signer 633b, and the signature date and time 633c. The signature value 633a is generated by encrypting the hash value 623 generated in step S812 using a private key prepared in advance. It is preferable that a public key paired with this private key also be included in the digital signature 633. The signer 633b is information indicating the manufacturer of the smartphone 400. By adding such a digital signature 633 to the image file 600A (and similarly to the image file 600B), it is indicated that the image file 600A is a reliable image file. Note that, as the signer 633b, the model of the smartphone 400 may be used instead of the manufacturer of the digital camera 100. The date and time at which generation of the digital signature 633 is completed is used as the signature date and time 633c. The signature date and time 633c may also be included in the provenance 613.

In step S814, the control unit 401 adds the metadata 601 to the image data 604 to generate the image file 600A. The image file 600A is generated in accordance with the JPEG format when the image data 604 is a still image, and is generated in accordance with the MPEG format when the image data 604 is a moving image.

In step S815, the control unit 401 stores the image file 600A generated in step S814 in the data storage unit 351.

In step S816, the control unit 401 notifies the user that the generation of the image file 600A has been completed. The notification method is not particularly limited, and examples thereof include a method of displaying a message indicating completion of the generation of the image file 600A on the display device 412, as well as a method using sound.

In step S817, the control unit 401 transmits the image file 600A stored in the data storage unit 351 in step S815 to the digital camera 100 via the network line 411. As a result, the image file 600A can be checked on the digital camera 100. Note that, when the image file 600A is checked on the smartphone 400, step S817 may be omitted.

In step S818, the control unit 401 determines whether an instruction to terminate the image generation process has been issued. The termination of the image generation process is instructed by the user of the smartphone 400 operating the input device. The control unit 401 can determine whether the instruction to terminate the image generation process has been issued based on the presence or absence of such an instruction via the input device. If it is determined in step S818 that termination has been instructed, the process ends. On the other hand, if it is determined in step S818 that termination has not been instructed, the process returns to step S801, and the subsequent steps are sequentially performed.

Note that the image file 600A or the image file 600B may each be further edited. In such a case, if the editing is performed through a proper procedure using an authorized editing tool, new provenance information 603 is generated in accordance with a predetermined technical standard based on the editing details. The new provenance information 603 is added to and stored in the metadata 601. In this manner, each time the image file 600A or the image file 600B is edited, new provenance information 603 is generated and is added to and stored in the metadata 601. On the other hand, the editing of the image file 600A or the image file 600B may be performed using an unauthorized editing tool or may be performed through an improper procedure. In such a case, the provenance information 603 may not be added, or the provenance information 603 may not conform to the predetermined technical standard.

By generating the hash value 623 and the digital signature 633, tampering with the image file 600A and the image file 600B can be detected. For example, a hash function is executed on the binary data of the image data 604 of the image file 600A to generate a hash value. The generated hash value is then compared with the hash value 623 of the image data 604 (the hash value 623a of the image data) in the image file 600A to be evaluated for tampering. As a result of this comparison, when the two hash values match each other, it can be determined that no tampering has occurred, whereas when the two hash values do not match, it can be determined that tampering has occurred. Similarly, a hash function may also be executed on the binary data of the shooting information 602 to generate a hash value. The generated hash value is then compared with the hash value 623 of the shooting information 602 (the hash value 623c of the shooting information) in the image file 600A to be evaluated for tampering. As a result of this comparison, when the two hash values match each other, it can be determined that the shooting information 602 has not been tampered with, whereas when the two hash values do not match, it can be determined that the shooting information 602 has been tampered with. In addition, a hash function may also be executed on the binary data of the provenance 613 to generate a hash value. The generated hash value is then compared with the hash value 623 of the provenance 613 (the hash value 623b of the provenance) in the image file 600A to be evaluated for tampering. As a result of this comparison, when the two hash values match each other, it can be determined that the provenance 613 has not been tampered with, whereas when the two hash values do not match, it can be determined that the provenance 613 has been tampered with. The comparison of the binary data may be performed for each unit such as the edit history 613b and the creator 613d. Furthermore, as described above, the signature value 633a can be decrypted using the public key. If the hash values match, it can also be determined that verification of the signature value 633a has succeeded. In this manner, the smartphone 400 can incorporate a mechanism for detecting tampering into the image file 600A and the image file 600B.

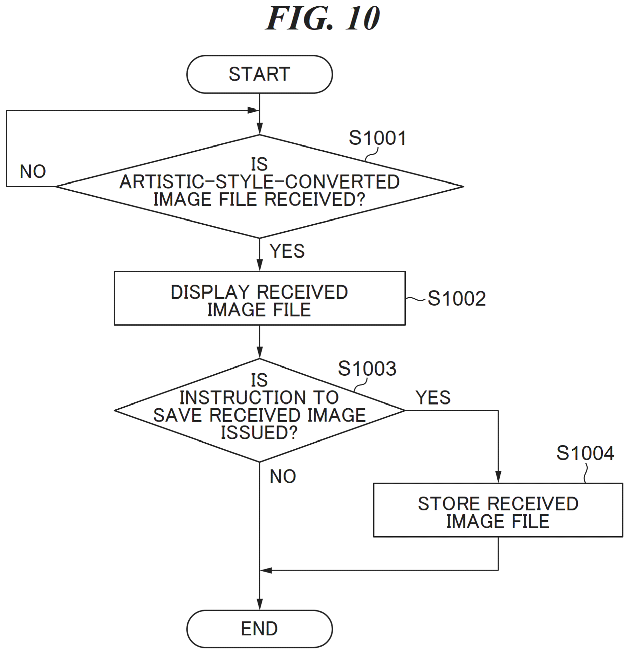

Fig. 10 is a flowchart illustrating a process (an image reception process) performed by the digital camera. The image reception process is a process in which the digital camera 100 receives image data transmitted from the smartphone 400. As illustrated in Fig. 10, in step S1001, the system control unit 50 of the digital camera 100 determines whether the image file 600A, which has been subjected to artistic style conversion on the smartphone 400, has been received from the smartphone 400. If it is determined in step S1001 that the image file 600A has been received, the process proceeds to step S1002. On the other hand, if it is determined in step S1001 that the image file 600A has not been received, the process waits at step S1001.

In step S1002, the system control unit 50 displays the image data 604 of the image file 600A determined to have been received in step S1001 on the display unit 28.

In step S1003, the system control unit 50 determines whether an instruction to save the image file 600A, which has been determined to have been received in step S1001, has been issued. The instruction to save the image file 600A is issued, for example, by operating a menu screen displayed on the display unit 28. If it is determined in step S1003 that the instruction to save the image file 600A has been issued, the process proceeds to step S1004. On the other hand, if it is determined in step S1003 that the instruction to save the image file 600A has not been issued, the process ends.

In step S1004, the system control unit 50 stores the image file 600A determined to have been received in step S1001 in the recording medium 200, and the process ends.

While the preferred embodiments of the present invention have been described above, the present invention is not limited to the embodiments described herein, and various modifications and changes may be made without departing from the spirit and scope of the invention. In addition, the present invention can also be realized by processing in which a program for implementing one or more of the functions of the above-described embodiments is supplied to a system or apparatus via a network or a storage medium, and one or more processors of a computer of the system or apparatus read out and execute the program. The present invention can also be realized by a circuit, such as an application-specific integrated circuit (ASIC), that implements one or more of the functions. Furthermore, the system including the digital camera 100, the smartphone 400, and the image data server 300 may further include, for example, a personal computer, a personal digital assistant (PDA), a mobile phone terminal, and the like.

This application claims the benefit of priority to Japanese Patent Application No. 2024-005381, filed on January 17, 2024, the entire contents of which are incorporated herein by reference.

### Reference Signs List

- 106: Machine learning unit
- 352: Image data management unit
- 400: Smartphone
- 501: Input data
- 502: Output data
- 503: Trained model
- 505: Machine learning information
- 603: Provenance information
- 604: Image data

## Claims

1. An information processing device, comprising:
a generation unit configured to generate, as content, output data output from a trained model of machine learning; and
an addition unit configured to add, to the generated content, information relating to data used for training the trained model of machine learning.

2. The information processing device according to claim 1, wherein the generation unit is configured to:
create the trained model using first image data as input data, and
generate, as the content, second image data that is different from the first image data and that is the output data output from the trained model.

3. The information processing device according to claim 1, wherein the addition unit is further configured to add, to the generated content, information indicating a storage location in which the trained model is stored.

4. The information processing device according to claim 1, wherein the addition unit is further configured to add, to the generated content, information indicating a storage location in which input data used for creation of the trained model is stored.

5. The information processing device according to claim 2, further comprising an acquisition unit configured to acquire the input data from an external device different from the information processing device.

6. The information processing device according to claim 1, wherein the addition unit is further configured to add, to the content, a hash value of the content.

7. The information processing device according to claim 6, wherein the addition unit is further configured to add, to the content, a digital signature obtained by encrypting the hash value with a private key.

8. The information processing device according to claim 1, further comprising a transmission unit configured to transmit, to an external device, data input to the trained model for generation of the content by the generation unit,
wherein the addition unit is further configured to add, to the generated content, information indicating a location of the external device.

9. The information processing device according to claim 1, wherein the addition unit is configured to add the information to the generated content such that at least a part of the information is in a reduced or compressed state.

10. An information processing device, comprising:
a generation unit configured to generate new image data as content by inputting image data to a trained machine learning model and causing the trained machine learning model to output the new image data; and
an addition unit configured to add, to the generated content, the image data used to cause the trained machine learning model to output the new image data.

11. A control method for an information processing device, the control method comprising:
a generation step of generating, as content, output data output from a trained model of machine learning; and
an addition step of adding, to the generated content, information relating to data used for training the trained model of machine learning.

12. A program that causes a computer to perform the control method according to claim 11.
